# EUROPÄISCHE PATENTSCHRIFT

(11) **EP 1 871 568 B1**
(45) Veröffentlichungstag und Bekanntmachung des Hinweises auf die Patenterteilung: **04.03.2009**
(21) Anmeldenummer: 05799806.4
(22) Anmeldetag: 29.10.2005
(51) Int. Cl.: B23Q 11/08

(54) **SCHUTZABDECKUNG MIT STABILISIERUNGSELEMENT**
PROTECTIVE COVER WITH STABILIZING ELEMENT
CACHE DE PROTECTION AVEC ELEMENT DE STABILISATION

(30) Priorität: 12.09.2005 DE 102005043604
(43) Veröffentlichungstag der Anmeldung: 02.01.2008
(73) Patentinhaber: Möller Werke GmbH, 33649 Bielefeld (DE)
(72) Erfinder: BÜLENT, Cakmak, 33649 Bielefeld (DE)
(74) Vertreter: Schober, Mirko
(86) Internationale Anmeldenummer: PCT/EP2005/011598
(87) Internationale Veröffentlichungsnummer: WO 2007/031112

(56) Entgegenhaltungen:
- EP-A- 1 074 337
- DE-A1- 10 308 024
- DE-C1- 3 923 332

## Beschreibung

### TECHNISCHES GEBIET

Die Erfindung betrifft eine Schutzabdeckung für Führungsbahnen von Werkzeugmaschinen nach dem Oberbegriff von Anspruch 1, wie z.B. aus der DE-A-103 08 024 bekannt.

### STAND DER TECHNIK

Führungsbahnabdeckungen für Werkzeugmaschinen bestehen in der Regel aus Faltenbälgen mit vorgesetzten Federstahl-Lamellen, die an einer Mehrzahl, die Abdeckung tragende, miteinander über Kopplungselemente verbundene Rahmenelemente angeordnet sind. Die Stabilisierung der bekannten Abdekkungen wird in Längsrichtung der Rahmenelemente dabei vor allem durch die Ausbildung als Faltenbalg erreicht, wobei das Balgmaterial in aller Regel noch verstärkt werden muß. Durch die Ansprüche an das Material und die zunehmend höher werdenden Geschwindigkeiten, mit denen entsprechende Abdekkungen durch Linearmotorantriebe auf den Führungsbahnen verfahren werden müssen, stoßen die herkömmlichen Faltenbalgabdeckungen zunehmend an ihre Leistungsgrenzen.

### DIE ERFINDUNG

Es ist daher die Aufgabe der vorliegenden Erfindung, eine Schutzabdeckung für Führungsbahnen und ein entsprechendes Stabilisierungselement für solche Abdeckungen zur Verfügung zu stellen, die den geschilderten erhöhten Anforderungen hinsichtlich der Verfahrgeschwindigkeiten gerecht werden.

Gelöst wird diese Aufgabe durch eine Schutzabdeckung mit den Merkmalen des Anspruchs 1. Weitere vorteilhafte Ausführungsformen finden sich in den Unteransprüchen.

Das erfindungsgemäße Stabilisierungselement weist ein gewinkeltes Profil auf, welches durch wenigstens zwei miteinander vorzugsweise einstückig verbundene Schenkel gebildet wird. Das Stabilisierungselement ist so ausgeführt, daß es mittels Befestigungselementen, die sich an die Schenkel anschließen, zwischen jeweils zwei benachbarten Rahmenelementen einer Schutzabdeckung befestigt werden kann. Die Schenkel lassen sich durch die Bewegung der Rahmenelemente aufeinander zu bewegen, so daß das Stabilisierungselement in Vorschubrichtung der Abdeckung komprimiert wird, wobei sich im Stabilisierungselement eine Spannung aufbaut, die die Schenkel spreizt und angrenzende Rahmenelemente tendenziell auseinander drückt. In Längsrichtung der Rahmenelemente sind die Schenkel des Stabilisierungselements vorzugsweise flächig ausgeführt, so daß gerade bei hängenden Abdeckungen ein gegeneinander erfolgendes Bewegen in Längsrichtung der Rahmenelemente nicht möglich ist. Durch die gewinkelte Ausführung wird demnach eine Längsstabilisierung der Rahmenelemente und damit der gesamten Abdeckung erzielt.

Das Stabilisierungselement ist vorzugsweise aus einem Kunststoff (vorzugsweise PP) gebildet, so daß es sich einfach und ohne großen Kostenaufwand herstellen läßt.

Die Erfindung betrifft auch eine mit dem Stabilisierungselement versehene Schutzabdeckung für Führungsbahnen von Werkzeugmaschinen.

### KURZBESCHREIBUNG DER ZEICHNUNGSABBILDUNG

Die Schutzabdeckung wird zusammen mit dem erfindungsgemäßen Stabilisierungselement anhand der Figuren 1 bis 5 nachfolgend schematisch näher erläutert.
- Figur 1 -: zeigt ein Beispiel für eine erfindungsgemäße Schutzabdeckung,
- Figur 2 -: zeigt einen vergrößerten Ausschnitt der in Fi- gur 1 dargestellten Schutzabdeckung,
- Figur 3a -: zeigt eine perspektivische Ansicht eines er- findungsgemäßen Stabilisierungselements,
- Figur 3b -: zeigt eine schematische Ansicht eines erfin- dungsgemäßen Stabilisierungselements im Quer- schnitt,
- Figur 4 -: zeigt eine perspektivische Ansicht einer zwei- ten Ausführungsform eines erfindungsgemäßen Stabilisierungselements,
- Figur 5 -: zeigt eine perspektivische Ansicht eines wei- teren erfindungsgemäßen Stabilisierungsele- ments.

### BESTER WEG ZUR AUSFÜHRUNG DER ERFINDUNG

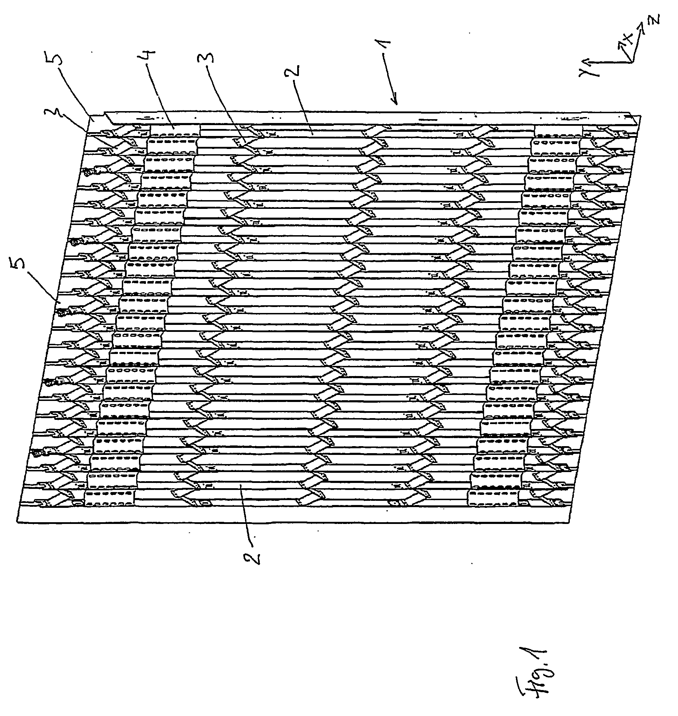

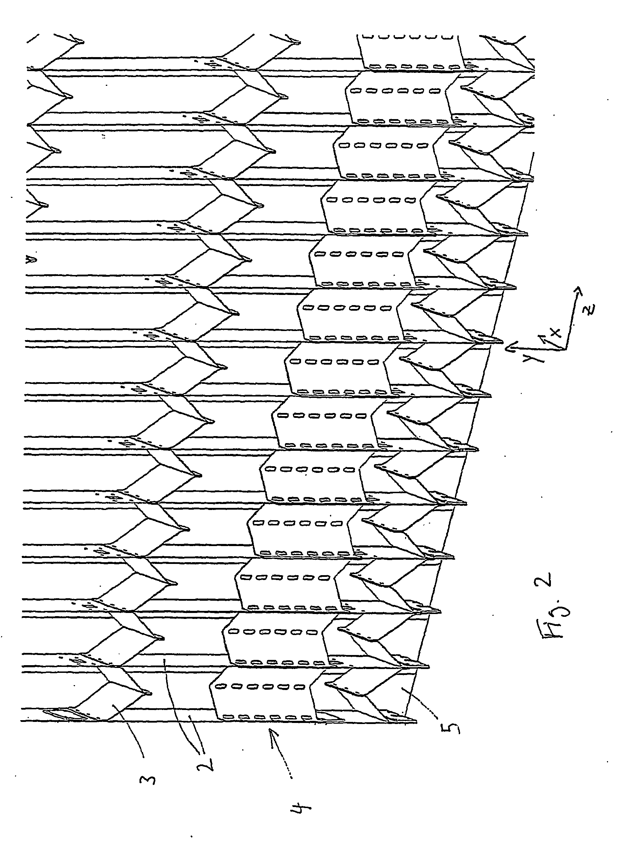

Ein Beispiel für eine mit dem erfindungsgemäßen Stabilisierungselement versehene Schutzabdeckung ist in Figur 1 und in Ausschnittvergrößerung in Figur 2 dargestellt.

Abgebildet ist im vorliegenden Fall eine hängende Abdeckung 1, wobei es sich im Regelfall lediglich um einen Teil einer Schutzabdeckung für Führungsbahnen von Werkzeugmaschinen handelt, da solche Schutzabdeckungen üblicherweise über entsprechende, miteinander verbundene Anordnungen in horizontaler und vertikaler Richtung, ggf. auch über schräg verlaufende Anordnungen, verfügen. Die erfindungsgemäße Schutzabdeckung ist aus tragenden Rahmen bzw. Rahmenelementen 2 aufgebaut, welche ihrerseits üblicherweise in Führungen (nicht gezeigt) eingehängt bzw. geführt sind. Die Rahmenelemente 2 sind mit blattfederartigen Kopplungselementen 3 miteinander gekoppelt und weisen jeweils Schutzlamellen 5 auf, die etwa senkrecht zu den Rahmenelementen 2 verlaufen, wobei sich die Schutzlamellen 5 benachbarter Rahmenelemente 2 gegenseitig überdecken und so eine über die gesamte Abdeckung 1 reichende geschlossene Fläche bilden.

Die Rahmenelemente 2 sind in der (nicht gezeigten) Führung gegeneinander verschiebbar, wobei sich die Abdeckung auf eine maximale Länge in Richtung Z ausziehen und auf eine minimale Länge zusammenschieben läßt. Die auftretenden Kräfte beim Öffnen und Schließen der Abdeckung sowie deren Eigengewicht sorgen auch für Belastungen in Längsrichtung Y der Rahmenelemente 2, d. h. senkrecht zur Vorschubrichtung Z. Dies führt insbesondere in Y-Richtung zu einer gegenseitigen Verschiebung benachbarter Rahmenelemente 2.

Benachbarte Rahmenelemente 2 sind daher über das erfindungsgemäße Stabilisierungselement 4 verbunden, welches bevorzugt im Bereich des oberen und unteren Randes der Schutzabdeckung 1 vorgesehen ist. Andere Positionen für das Stabilisierungselement 4 wie auch die Anordnung mehrerer Stabilisierungselemente 4 sind natürlich im Hinblick auf die konkreten Belastungen und Anforderungen an die Schutzabdeckung 1 ebenso denkbar. Ebenso können die Stabilisierungselemente zwischen zwei Rahmenteilen 2 auch einander entgegengesetzt, d. h. mit einander entgegengesetzten Öffnungswinkeln (s. u.) angeordnet werden.

Wie anhand der folgenden Figuren noch zu erläutern sein wird, sorgen die Stabilisierungselemente 4 aufgrund ihrer gewinkelten Ausführung für eine Längsstabilität, zudem werden die beim Öffnen und Schließen der Abdeckung 1 auftretenden Zug- und Druckkräfte mit Hilfe der Stabilisierungselemente 4 gedämpft, wobei sie zudem auch einen wesentlichen Teil der Vorspannkräfte liefern, die für einen dichtenden Abschluß der sich überlappenden Lamellen 5 sorgen.

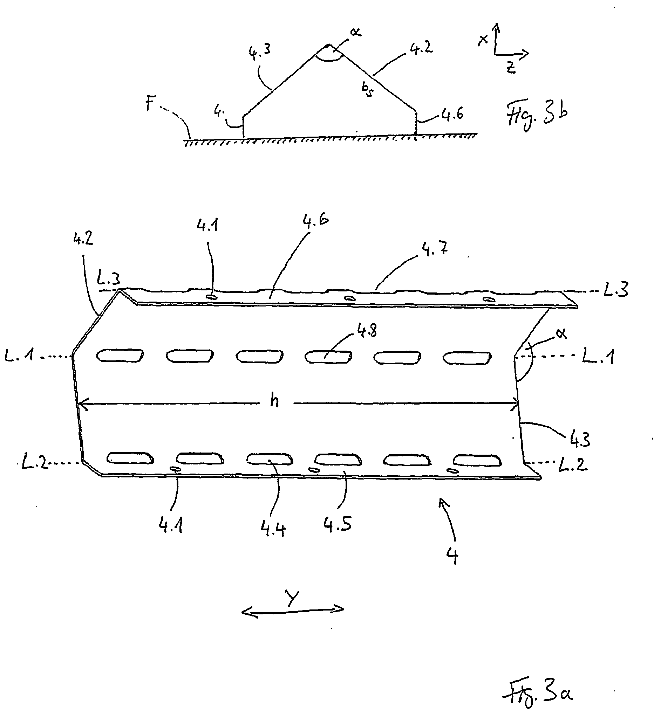

Figur 3a zeigt ein Beispiel für ein erfindungsgemäßes Stabilisierungselement 4 in einer ersten Ausführungsform. Das Stabilisierungselement 4 ist gewinkelt aufgebaut, wobei es im gezeigten Beispiel zwei Schenkel 4.2, 4.3 aufweist, die längs einer Linie L.1 miteinander verbunden einen Winkel α bilden. Auf der der Verbindungslinie L.1 abgewandten Seite eines jeden Schenkels 4.2, 4.3 sind jeweils Befestigungselemente 4.5, 4.6 vorgesehen, mit denen das Stabilisierungselement 4 zwischen zwei benachbarten Rahmenelementen (vgl. Figur 1 und 2) befestigt werden kann.

An einem Schenkel können auch mehrere Befestigungselemente 4.5, 4.6 vorgesehen sein. Bevorzugt erstreckt sich pro Schenkel ein Befestigungselement über etwa die gesamte Schenkellänge. Vorzugsweise handelt es sich bei den Befestigungselementen 4.5, 4.6 um im wesentlichen flächige, entlang der Linien L.3, L.2 von den jeweiligen Schenkeln 4.2, 4.3 abgewinkelte Bereiche, die zur flächigen Anlage an die jeweiligen Rahmenelemente ausgelegt sind. Die Befestigung an den Rahmenelementen kann zum Beispiel mittels durch entsprechende Löcher 4.1 in den Befestigungselementen 4.5, 4.6 geführte Nieten oder dergleichen erfolgen.

Zur Realisierung des Winkels α und der Winkel zwischen einem Schenkel 4.2, 4.3 und dem entsprechenden Befestigungselement 4.6, 4.5 sind bevorzugt Abschwächungen im Material des vorzugsweise einstückig ausgebildeten Stabilisierungselementes 4 vorgesehen. Die Abschwächungen sind jeweils entlang der Knicklinien L.1, L.2, L.3 vorgesehen, wobei es sich bevorzugt um die in den Figuren gezeigten Ausnehmungen 4.4, 4.7, 4.8 handelt. Andere Formen von Abschwächungen zur Erleichterung des Abwinkelns von Befestigungselementen und Schenkeln können auch durch spanendes Abtragen oder Temperaturbehandlung erreicht werden.

Das Stabilisierungselement 4 besteht aus einem flexiblen Material, vorzugsweise aus Polypropylen (PP), so daß der Winkel α durch äußere Krafteinwirkung, etwa beim gegenseitigen Verschieben der durch das Stabilisierungselement 4 verbundenen Rahmenelemente, veränderlich ist. Beim Ändern des Winkels α wird jeweils eine Kraft im Stabilisierungselement 4 hervorgerufen, die der Winkeländerung entgegenwirkt und die Schenkel 4.2, 4.3 entweder spreizt oder zusammenzieht. Diese Kraft sorgt beim Öffnen bzw. Schließen der Schutzabdeckung für eine entsprechende Dämpfung, die der Öffnungs- bzw. Schließbewegung entgegenwirkt.

Durch die Flexibilität in Y-Richtung wird einerseits das Zusammenschieben und Auseinanderziehen der mit dem Stabilisierungselement 4 verbundenen Rahmenteile begünstigt. Zum anderen wird durch den gewinkelten Aufbau des Stabilisierungselements 4 und die Längserstreckung der Schenkel 4.2, 4.3 in Y-Richtung in dieser Richtung ein gegenseitiges Verschieben der mit dem Stabilisierungselement 4 verbundenen Rahmenelemente 2 wirksam verhindert.

Dabei wird bevorzugt, daß die Höhe h des Stabilisierungselements 4 größer ist als die Schenkelbreite bₛ. Die entsprechende Geometrie ergibt sich aus der Betrachtung der Figuren 3a und 3b. Die Höhe h des Stabilisierungselements 4 ergibt sich aus der Längserstreckung des Stabilisierungselements 4 parallel zu einer der Linien L.1, L.2, L.3, d. h. in Y-Richtung (Figur 3a). Die Schenkelbreite bₛ ist die Breite eines Schenkels 4.2, 4.3 vom entlang der Linie L.1 gebildeten "Dachgiebel" bis dorthin, wo sich an den Schenkel 4.2, 4.3 das jeweilige Befestigungselement 4.6 bzw. 4.5 anschließt.

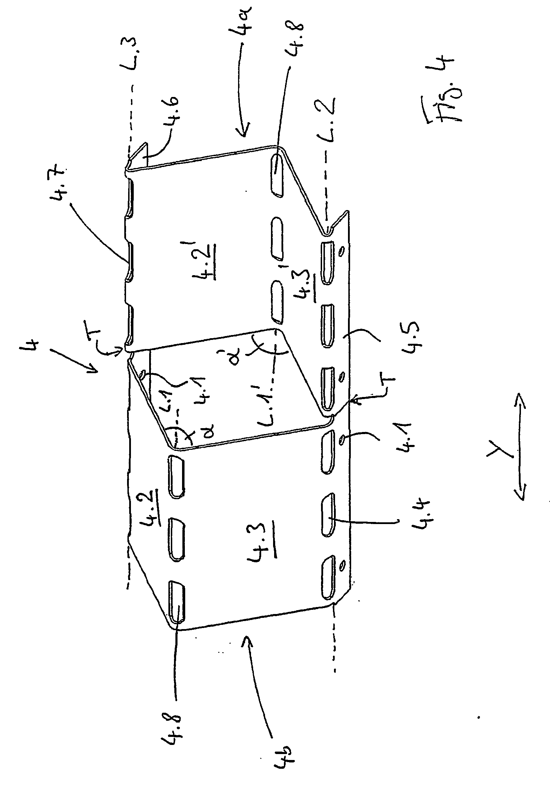

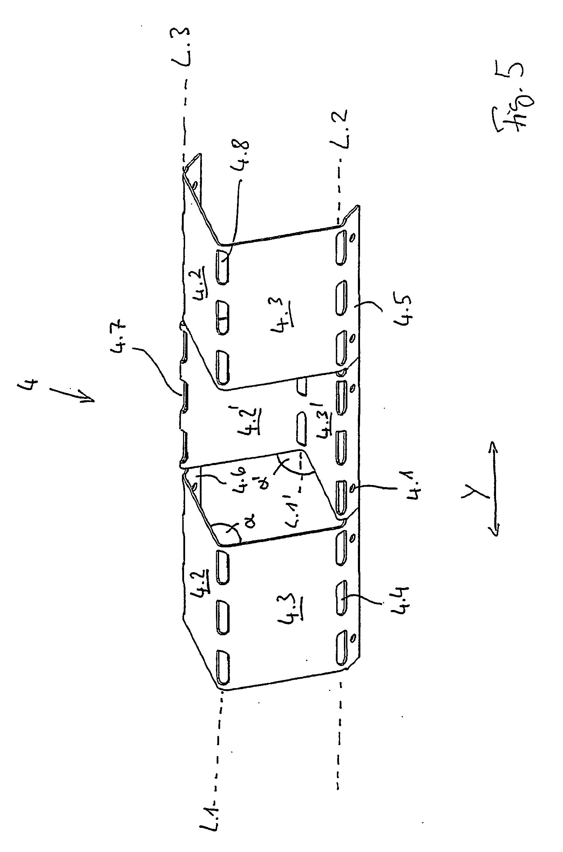

In den Figuren 4 und 5 sind weitere Ausführungsformen des erfindungsgemäßen Stabilisierungselements 4 gezeigt, wobei die in den Figuren 3a und 3b verwendeten Bezugszeichen entsprechende gleiche Elemente bezeichnen, so daß auf deren Beschreibung zur Vermeidung von Wiederholungen im folgenden verzichtet wird.

Nachfolgend soll lediglich kurz auf die Unterschiede eingegangen werden.

Die in Figur 4 gezeigte Variante zeichnet sich dadurch aus, daß neben den Schenkeln 4.2, 4.3 zwei weitere Schenkel 4.2', 4.3' vorgesehen sind. Beide Schenkelpaare schließen sich an gemeinsame Befestigungselemente 4.5, 4.6 an: Die Schenkel 4.2, 4.2' sind mit dem Befestigungselement 4.5 verbunden, die Schenkel 4.3, 4.3' sind mit dem Befestigungselement 4.6 verbunden. Die Schenkelpaare können natürlich auch räumlich getrennt und mit jeweils getrennten Befestigungselementen verbunden sein. Eine solche Anordnung erhält man zum Beispiel, wenn man das in Figur 4 gezeigte Stabilisierungselement 4 entlang der Trennlinie T durchschneidet. Die Schenkel 4.2, 4.3 sind so wie im vorherigen Beispiel ausgeführt und bilden einen Winkel α, während die Schenkel 4.2', 4.3' einen Winkel α' miteinander bilden. Die Öffnungswinkel α und α' sind einander entgegengesetzt und vorzugsweise gleich groß, d. h. die Schenkel 4.2 und 4.2' bzw. 4.3 und 4.3' weisen bevorzugt dieselbe Schenkelbreite (vgl. Figur 3b) auf. Dies führt in der gezeigten Bauform dazu, daß die Schenkel 4.2, 4.3 mit den jeweiligen Befestigungselementen 4.6 bzw. 4.5 jeweils stumpfe Winkel (< 90°) bilden, während die Schenkel 4.2', 4.3' spitze Winkel mit den Befestigungselementen 4.6, 4.5 bilden.

Bei der Öffnungs- bzw. Schließbewegung der Schutzabdeckung werden - wie oben erwähnt - im Stabilisierungselement 4 Kräfte (Biegekräfte) erzeugt, welche sich auf die Rahmenelemente der Schutzabdeckung übertragen.

Durch die einander entgegengesetzte Öffnung der beiden Schenkelpaare werden solche Biegekräfte entsprechend ausbalanciert und somit einseitige Schiebekräfte auf die Rahmenelemente und die Abdeckung vermieden. Natürlich können mehr als zwei Schenkelpaare für das erfindungsgemäße Stabilisierungselement 4 verwendet werden, wie es in der Figur 5 gezeigt ist. Vorzugsweise ist das mehrpaarige Stabilisierungselement 4 einstückig ausgebildet. Es kann aber auch mehrteilig ausgebildet sein, wobei hier insbesondere Stabilisierungselemente 4 in Frage kommen, bei denen die Öffnungswinkel jeweils entgegengesetzt sind. Umgekehrt können mehrere einzelne Stabilisierungselemente 4 zu einem einheitlichen Stabilisierungselement 4 zusammengeführt werden.

Durch das erfindungsgemäße Stabilisierungselement kann auf herkömmliche Faltenbalgabdeckungen verzichtet und es können schnellere Verfahrgeschwindigkeiten einer erfindungsgemäßen Schutzabdeckung erreicht werden, da zum einen die Längsstabilisierung ermöglicht wird und zum anderen eine die Umkehr der Verfahrrichtung begünstigende Dämpfung der beim Verfahren auftretenden Zug- und Druckkräfte ermöglicht wird. Dadurch, daß das Stabilisierungselement zudem maßgeblich Vorspannung der Einrichtung im Hinblick auf den dichten Abschluß der Lamellen beiträgt, wird zudem eine hohe Betriebssicherheit der erfindungsgemäßen Schutzabdeckung erzielt.

## Patentansprüche

1. Faltenbalgfreie Schutzabdeckung (1) für Führungsbahnen von Werkzeugmaschinen, welche eine Mehrzahl miteinander über Kopplungselemente (3) verbundene gegeneinander in Richtung (Z) der Führungsbahn verschiebliche Rahmenelemente (2) aufweist, wobei zwischen jeweils zwei Rahmenelementen (2) ein in Richtung (Z) der Führungsbahn federndes Stabilisierungselement 4) angeordnet ist, welches wenigstens zwei einen Winkel (α) bildende und miteinander entlang einer ersten Linie (L.1) verbundene Schenkel (4.2, 4.3) aufweist, wobei das Stabilisierungselement (4) an die Schenkel (4.2, 4.3) anschließende, vom jeweiligen Schenkel (4.2) und (4.3) entlang entsprechender zweiter Linien (L.2, L.3) abgewinkelte Befestigungsabschnitte (4.5) bzw. (4.6) zur Befestigung an jeweils einem von zwei benachbarten Rahmenelementen (2) einer Schutzabdeckung (2) aufweist, wobei die Rahmenelemente (2) jeweils etwa senkrecht hierzu verlaufende Schutzlamellen (5) aufweisen, wobei sich die Schutzlamellen (5) benachbarter Rahmenelemente (2) gegenseitig überdecken,
**dadurch gekennzeichnet,**
**daß** das Stabilisierungselement (4) so angeordnet ist, daß die erste Linie (L.1) in Längsrichtung (Y) der Rahmenelemente (2) verläuft, und so ausgebildet ist, daß die durch den senkrechten Abstand zwischen der ersten Linie (L.1) und dem an einen der Schenkel (4.2, 4.3) sich anschließenden Befestigungsabschnitt (4.5, 4.6) definierte Schenkelbreite (bₛ) kleiner ist als die Höhe (h) des Stabilisierungselements (4), welche durch seine Längserstreckung in einer zu einer der Linien (L.1, L.2, L.3) parallelen Richtung (Y) definiert ist.

2. Schutzabdeckung (1) nach Anspruch 1,
**dadurch gekennzeichnet,**
**daß** zwischen zwei benachbarten Rahmenelementen (2) eine Mehrzahl Stabilisierungselemente (4) vorgesehen sind.

3. Schutzabdeckung (1) nach einem der Ansprüche 1 oder 2,
**dadurch gekennzeichnet,**
**daß** das Stabilisierungselement (4) in einem Endabschnitt zweier benachbarter Rahmenelemente (2) vorgesehen ist.

4. Schutzabdeckung (1) nach einem der vorherigen Ansprüche,
bei welcher der Winkel (α) der Schenkel (4.2, 4.3) durch äußere Krafteinwirkung veränderbar ist und die beiden Schenkel (4.2, 4.3) bei fehlender äußerer Krafteinwirkung auf das Stabilisierungselement (4) gespreizt sind.

## Claims

1. Bellows-free protective cover (1) for guideways of machine tools, which has a number of frame elements (2) which are connected to one another through coupling elements (3) and which are displaceable relative to one another in the direction (Z) of the guideway, wherein between each two frame elements (2) there is a stabilising element (4) which is resilient in the direction (Z) of the guideway and which has at least two arms (4.2, 4.3) which are connected to one another along a first line (L.1) and form an angle (α) wherein the stabilising element (4) has fastening sections (4.5) and (4.6) respectively adjoining the arms (4.2, 4.3) and angled from the respective arm (4.2) and (4.3) along corresponding second lines (L.2, L.3) for fastening on each one of two adjoining frame elements (2) of one protective cover (2) wherein the frame elements (2) each have protective slats (5) running approximately at right angles thereto wherein the protective slats (5) of adjoining frame elements (2) mutually overlap,
**characterised in that** the stabilising element (4) is arranged so that the first line (L.1) runs in the longitudinal direction (Y) of the frame elements (2) and is designed so that the arm width (bₛ) defined by the vertical spacing between the first line (L.1) and the fastening section (4.5, 4.6) adjoining one of the arms (4.2, 4.3) is smaller than the height (h) of the stabilising element (4) which is defined by its longitudinal extension in a direction (Y) parallel to one of the lines (L.1, L.2, L.3).

2. Protective cover (1) according to claim 1 **characterised in that** a number of stabilising elements (4) are provided between two adjoining frame elements (2).

3. Protective cover (1) according to one of claims 1 or 2 **characterised in that** the stabilising element (4) is provided in an end section of two adjoining frame elements (2).

4. Protective cover (1) according to one of the preceding claims in which the angle (α) of the arms (4.2, 4.3) can be changed through external force action and the two arms (4.2, 4.3) are spread out in the absence of any external force action on the stabilising element (4).

## Revendications

1. Revêtement de protection sans soufflet (1) pour des glissières de guidage de machines-outils, qui présente plusieurs éléments de cadre (2), qui, reliés ensemble par l'intermédiaire d'éléments de couplage (3), peuvent être déplacés, à l'opposé les uns des autres, dans la direction (Z) de la glissière de guidage, sachant que deux éléments de cadre (2) sont associés à un élément de stabilisation (4) respectif, qui, faisant ressort dans la direction (Z), présente au moins deux ailes (4.2, 4.3), qui forment un angle (α) et sont reliées ensemble le long d'une première ligne (L.1), l'élément de stabilisation (4) présentant des sections de fixation (4.5), respectivement (4.6), raccordées aux ailes (4.2, 4.3) et coudées à partir de l'aile respective (4.2) et (4.3), le long de deuxièmes lignes (L.2, L.3) correspondantes, pour la fixation respective à l'un de deux voisins éléments de cadre (2) d'une Revêtement de protection sans soufflet (1), sachant que les éléments de cadre (2) présentent chacun des lamelles de protection (5) s'étendant perpendiculairement par rapport à ceux-ci, lesdites lamelles de protection (5) d'éléments de cadre (2) voisins se recouvrant réciproquement,
**caractérisé en ce que**
les éléments de stabilisation (4) sont disposés de sorte que la première ligne (L.1) s'étend dans la direction longitudinale (Y) des éléments de cadre (2) et est configurée de sorte que la largeur d'aile (bₛ), définie par la distance verticale entre la première ligne (L.1) et la section de fixation (4.5, 4.6), adjacente à l'une des ailes (4.2, 4.3), est plus petite que la hauteur (h) de l'élément de stabilisation (4), qui est définie par son étendue longitudinale dans une direction (Y) parallèle à l'une des lignes (L.1, L.2, L.3).

2. Revêtement de protection sans soufflet (1) selon la revendication 1,
**caractérisé en ce que**
sont plusieurs éléments de stabilisation (4) sont prévus entre deux éléments de cadre (2) voisins.

3. Revêtement de protection sans soufflet (1) selon revendication 1 ou 2,
**caractérisé en ce que**
l'élément de stabilisation (4) est prévu dans une zone d'extrémité de deux éléments de cadre (2) voisins.

4. Revêtement de protection sans soufflet (1) selon l'une des revendications précédentes,
dans lequel l'angle (α) des ailes (4.2, 4.3) peut être modifié sous l'action de forces extérieures et que les deux ailes (4.2, 4.3) sont écartées en l'absence de forces extérieures, agissant sur l'élément de stabilisation (4).
